Europäisches Patentamt

European Patent Office

Office européen des brevets

(11) Publication number: **0 095 930**
**A1**

(12) # EUROPEAN PATENT APPLICATION

(21) Application number: 83303115.6

(51) Int. Cl.³: **G 09 F 3/02**

(22) Date of filing: 31.05.83

(30) Priority: 28.05.82 NZ 200778
13.09.82 NZ 201888

(71) Applicant: Allflex International Ltd., 931 Tremaine Avenue, Palmerston North (NZ)

(72) Inventor: Reggers, Charles Gerardus, 1 Maxwells Line, Palmerston North (NZ)
Inventor: Liddell, Stafford Anthony Yardley, 129 Ruahine Street, Palmerston North (NZ)

(43) Date of publication of application: 07.12.83
Bulletin 83/49

(84) Designated Contracting States: **AT BE CH DE FR GB IT LI LU NL SE**

(74) Representative: Ablewhite, Alan James et al, MARKS & CLERK 57/60 Lincoln's Inn Fields, London WC2A 3LS (GB)

(54) Improvements in and relating to identification device.

(57) An identification device of the type which includes a surface (10) on which identification indicia can be positioned. The surface (10) is provided with at least one indicia area (14) defined by walls (17). A marking medium can be applied within the indicia area (14) to form a recognisable identification indicia character whereby the character is located below a plane defined by the upper peripheral edges of the walls (17). In a particular form of the invention the indicia area (14) is divided into a plurality of indicia areas (11a, 11b) and the marking medium can be applied to selected ones of the indicia areas (11a, 11b) to thereby form the recognisable identification indicia.

"Improvements in and relating to

Identification Device"


This invention relates to an identification device and more particularly to an identification device which has an indicia panel which is suitable, amongst other things, for the identification of animals.

The use of tags for animal identification purposes is well known and usually such tags are installed in the ear of an animal to be identified though they can also be applied to the leg, tail or other parts of the animal. These tags can be of so called one piece construction such as shown for example in U.S. Patent Specification 4060922 or of two piece construction such as shown in U.S. Patent Specification 3731414. Animal identification can incorporate a panel for identification indicia or can be of a type where identification is achieved by the actual colour of the tag and thus identification indicia is not usually present on the tag. It is, however, more common for the tag to have a panel on which identification indicia is or can be positioned. The indicia commonly used is numeric and can be applied to the panel during manufacture of the tag or by a marking ink, paint or other settable marking media applied by the end user. Marking by the end user has the advantage that the user can

0095930

enter his or her own particular information and the end product can be cheaper than a tag which is marked with indicia during the manufacturing process.

Unfortunately a problem with identification indicia applied either during manufacture or after manufacture is that there is a tendency for it to wear off due to abrasion during use because of it coming into contact with the animal's ear or body, fixtures such as fences, trees or the like or by brushing against other animals.

An object of the present invention is thus to provide an identification device which has a surface on which indicia can be positioned but in which indicia characters, when positioned on said surface, is/are protected from abrasion.

Broadly in one aspect therefore the invention provides an identification device of a type which includes a surface on which identification indicia can be positioned characterised in that said surface is provided with at least one indicia area defined by walls such that a marking medium can be applied within said indicia area to form a recognisable identification indicia character, whereby the character is located below a plane defined by the upper peripheral edges of the walls.

End users of such identification devices often find difficulty in achieving the correct sizes and dimensions for alpha or numeric indicia. If the size is not sufficiently large difficulty can arise in determining the indicia from a distance. If the dimensions are not correct then once again reading of the indicia from a distance is difficult, however, incorrect dimensioning of the indicia can also result in the indicia being misread even at close proximity.

Whilst the foregoing deals primarily with identification tags for animals the present invention relates equally to identification devices of other forms such as ankle straps, tail straps, breast plates, etc. which can be attached to animals for identification purposes or to devices which can be attached to other objects requiring identification, e.g. railway wagons, containers, storage or loading pallets, etc.

A further object of the present invention is to provide an identification device which has indicia areas included during manufacture which can be highlighted in various ways by the end user to achieve required identification indicia characters.

Accordingly the invention in a second broad aspect provides an identification device of a type which includes an area in which identification indicia can be positioned characterised in that said area is provided with at least one indicia character formed by a plurality of indicia areas each said area being defined such that a marking medium can be applied to selected indicia areas to thereby form recognisable identification indicia.

In the preferred form of the invention the indicia character is formed by the plurality of indicia areas being so positioned as to substantially form the shape of the figure eight. Preferably more than one indicia character is formed on the area, said area preferably being a panel.

According to a modified form of the invention there can be further included a colour coding area (defined in one preferred form by a peripheral wall) whereby a coloured marking medium can be applied to the area. In a preferred form the colour coding area is divided (such as for example by dividing walls) into two or more separate colour coding portions.

Preferably in one form of the invention the marking medium includes settable liquids, dry printing foils or the like.

The plurality of indicia areas and/or colour coding areas can be either embossed or recessed into the area or they can be provided by peripheral walls projecting from the surface of the panel. In yet a further form the indicia areas are formed by a combination of being recessed and peripheral walls.

To more fully describe the invention reference will be made to the accompanying drawings in which:-

Figure 1 is a perspective view of an identification device in the form of an animal ear tag which incorporates an area (i.e. a panel) for identification indicia,

Figure 2 is a face view of the device as shown in Figure 1, and

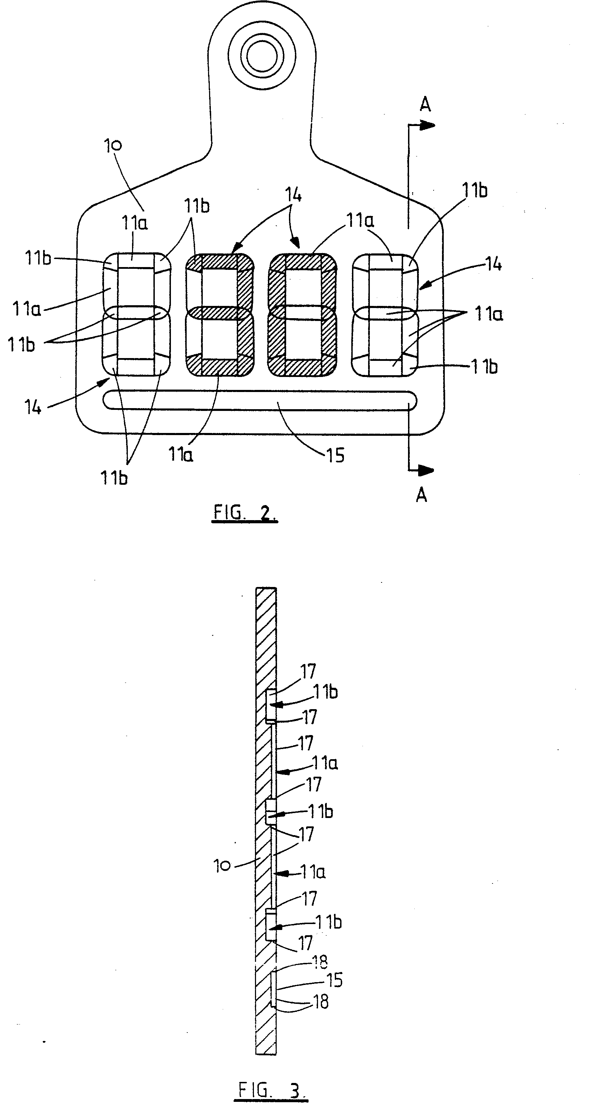

Figure 3 is an enlarged cross-sectional view on the line A-A of Figure 2.

The following description will, for ease of reference, refer to an identification device in the form of an animal identification tag, however, this is by way of example only as the device can, as previously explained, be one of many different types used for identification of a wide range of objects. The tag can be of any suitable construction which incorporates a panel 10 on which identification indicia can be positioned. Preferably the tag is manufactured from a resilient plastics material such as for example polyurethane, the advantages of which material for animal identification tags are well known. The size and shape of the panel 10 is largely arbitrary and depends on the end use of the particular tag. Panel 10 is, however, preferably of such a size that a set or sets of indicia characters formed by indicia areas (as will hereinafter be described) can be incorporated.

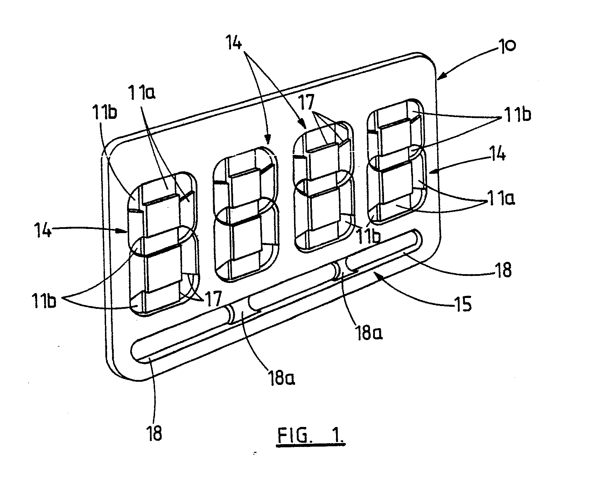

In the preferred form of the invention the indicia areas 11a and 11b are combined in such a fashion that they form an indicia character in substantially the form of a figure of eight as shown in Figure 1 of the drawings. The resultant figure of eight indicated by reference numeral 14 will be recognised as a so-called "digital" figure of eight thereby, for example, allowing the end user to apply a settable marking liquid to a selected number of the indicia areas 11a and 11b. A dry printing medium, such as derived from a dry printing foil, can also be used, however, normally such a medium would only be employed when the indicia areas 11a and 11b are highlighted during actual manufacture of the tag. In this way any number from 0 to 9 can be obtained and by way of example the second and third sets 14 of indicia areas 11a and 11b shown in Figure 1 have been highlighted to form the numerals 3 and 0 respectively. It will be appreciated that if the figure eight is required the marking medium is applied to all indicia areas 11a and 11b.

In a preferred form of the invention as illustrated areas 11b are of greater depth than areas 11a. This difference in depth between areas 11a and 11b provides for control of the flow of settable marking liquid when such is used as the marking medium. As an alternative the areas 11a and 11b could be of the same depth with the boundaries between adjacent areas defined by a small upward projection or wall. By way of example only the areas 11a can be of a depth of approximately half that of areas 11b with the latter being approximately of a depth equal to half the thickness of the panel.

The panel 10 can also incorporate a colour coding area which in the form illustrated in Figure 1 is an elongate area 15 which can be divided up into separate areas (say three) by dividing walls 16 (shown in dotted detail). Area 15 can thus be highlighted with a coloured marking medium such as a settable marking liquid for colour coding purposes or where a plurality of such areas are provided the areas can be highlighted with one more colours.

Indicia areas 11a and 11b and colour coding area(s) 15 are preferably defined by peripheral walls 17 and 18 respectively. These walls can be provided by either the areas 11a and 11b being recessed into the panel material (see Figure 2) so as to be below the surface of the panel or by upstanding walls (not shown) which project from the surface of the panel. Indicia areas can, in yet a further form of the invention be formed by embossing. In the embodiment where areas 11b are deeper than areas 11a the latter area is bounded solely by side walls 17 as end walls are not required due to the marking

- 7 -    0095930

medium usually also being applied to areas 11b located at each end thereof.

The identification device according to the present invention thus provides a ready means for the end user to highlight the various indicia areas to form identification indicia according to requirements.  In the illustrated arrangement the indicia areas 11a and 11b are combined to form indicia characters substantially in the form of figure eights. The indicia areas 11a and 11b can thus be highlighted by a marking medium to form recognisable indicia such as numerals 0-9 inclusive though they can also be used to form suitable alpha indicia.  If the end user requires colour coding as well as number coding then the colour coding area(s) can once again be highlighted by a settable marking medium of one or more colours.

The invention also permits the production of a manufactured identification device being formed with identification indicia prior to sale thereof.  This is achieved, as previously indicated, by the use of a suitable marking medium.

By applying the marking medium to the indicia areas the recognisable indicia character which results is located within the confines of the indicia areas and is thus protected from being worn away by abrasion.  For example, with animal identification tags abrasion of the indicia characters by the tag coming into contact with obstacles, the animal to which the tag is applied, or other animals is avoided.

In the simplest form of the invention the indicia character is formed by inner and outer walls (which may be formed as previously described) but with no transverse or substantially transverse dividing walls to divide the character up into a series of conjoined areas. With this arrangement recognisable indicia can be applied in the indicia area by a marking medium during manufacture or by an end user and will be protected from abrasion due to it lying below the upper peripheral edges of the walls. When the indicia area is set into the material from which the device is formed the surface of the panel or the like will itself form the upper peripheral edge of the walls defining the indicia character.

The invention as disclosed is open to modification. For example, the area in which the indicia areas are formed does not need to be of plastics material and could be leather, rubber or the like. The indicia character does not need to be a figure of eight but could be a character devised especially for confidential coding purposes. Where the device is to be used for say identification of containers, railway wagons or the like the area bearing the indicia characters could have adhesive properties or be provided with one or more adhesive areas so that it can be affixed to the object being identified. These and other modifications will be apparent to those skilled in the art.

- 9 -                           0095930

CLAIMS:

1.    An identification device of a type which includes an area (10) in which identification indicia can be positioned characterised in that said area (10) is provided with at least one indicia character (14) formed by a plurality of indicia areas (11a,11b) each said area being defined such that a marking medium can be applied to selected indicia areas (11a,11b) to thereby form recognisable identification indicia.

2.    An identification device of a type which includes a surface on which identification indicia can be positioned characterised in that said surface is provided with at least one indicia area defined by walls such that a marking medium can be applied within said indicia area to form a recognisable identification indicia character, whereby the character is located below a plane defined by the upper peripheral edges of the walls.

3.    The device as claimed in claim 1 or 2 characterised in that the indicia character (14) is formed by a plurality of indicia areas (11a,11b) positioned so as to substantially form the shape of a figure eight.

4.    The device as claimed in claim 1, 2 or 3 characterised in that the plurality of indicia areas (11a,11b) are recessed into the area.

5.    The device as claimed in claim 1, 2 or 3 characterised in that the plurality of indicia areas (11a,11b) are formed by projecting peripheral walls.

6.    The device as claimed in claim 1, 2 or 3 characterised in that the plurality of indicia areas (11a,11b) are embossments.

7.    The device as claimed in claim 4 characterised in that adjacent indicia areas (11a,11b) are recessed in at different depths.

8.    The device as claimed in claim 5 characterised in that in addition to the projecting peripheral walls at least some of said indicia areas (11a,11b) are recessed into the area.

9.    The device as claimed in any one of the preceding claims characterised by further including a colour coding area (15) within said area.

10.    The device as claimed in claim 9 characterised in that said colour coding area (15) is comprised of two or more separate colour coding portions.

11.    The device as claimed in claim 9 characterised in that the colour coding area (15) is defined by a peripheral wall (18).

12.    The device as claimed in any one of the preceding claims characterised in that the marking medium is a settable marking liquid or is derived from a hot stamping dry printing foil.

FIG. 1.

2/2

0095930

FIG. 2.

FIG. 3.

0095930.

# EUROPEAN SEARCH REPORT

**European Patent Office**

Application number

EP 83 30 3115

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-B-3 006 835 (INSTITUT FÜR RUNDFUNKTECHNIK) * Column 2, lines 12-47 * | 1-6 | G 09 F 3/02 |
| A | DE-A-2 758 708 (E.B. RITCHEY) * Page 6, paragraph 3 - page 7, paragraph 1 * | | |

TECHNICAL FIELDS SEARCHED (Int. Cl. ³)

A 01 K 11/00
G 06 K 19/04
G 09 F 3/00

The present search report has been drawn up for all claims

| Place of search | Date of completion of the search | Examiner |
|---|---|---|
| BERLIN | 18-08-1983 | BOTTERILL K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document